Europäisches Patentamt

European Patent Office

Office européen des brevets

(11) Publication number: **0 413 137 A2**

# EUROPEAN PATENT APPLICATION

(21) Application number: 90113392.6

(22) Date of filing: 12.07.90

(51) Int. Cl.⁵: **C09J 153/02**

(30) Priority: 15.08.89 US 394709

(43) Date of publication of application:
20.02.91 Bulletin 91/08

�ediaDesignated Contracting States:
**FR GB IT NL SE**

(71) Applicant: **National Starch and Chemical
Investment Holding Corporation
501 Silverside Road
Wilmington, Delaware 19809(US)**

(72) Inventor: **Decowski, Stanley
R.D. No. 1, Box 45
Glen Gardener, New Jersey 08826(US)**
Inventor: **Kauffman, Thomas
1 Craig Road
Bear, Delaware 19701(US)**

(74) Representative: **Hagemann, Heinrich, Dr.
Dipl.-Chem. et al
Patentanwälte HAGEMANN & KEHL
Ismaninger Strasse 108 Postfach 860329
D-8000 München 86(DE)**

(54) Toughened base cup attachment adhesive.

㊼ Polyethylene terephthalate bottle assemblies are prepared utilizing a hot melt adhesive composition comprising an ethylene vinyl acetate copOlymer, tackifying resin, wax or oil diluent and a substantially radial styrene-butadiene block copolymer, the copolymer having a styrene content greater than about 35% by weight, a modulus at 300% elongation of at least 4.5 MPa and a solution viscosity less than about 1000 cps, optionally also containing a styrene isoprene styrene block copolymer.

EP 0 413 137 A2

## TOUGHENED BASE CUP ATTACHMENT ADHESIVE

This invention relates to a multipart polyethylene terephthalate (PET) bottle assembly wherein a polyethylene base cup is joined to a blow-molded PET bottle with one of a specific class of hot melt adhesive compositions.

Polyethylene terephthalate (PET) bottles have substantially replaced glass bottles in many industrial applications and particularly in the soft-drink industry. Generally these bottles are produced by blow-molding a test-tube shaped preform so as to produce a bottle having a rounded bottom which requires a separate base cup in order to stand upright and also to give it sufficient integrity to withstand bottling, handling and storage conditions. The base cup is usually produced from a high density polyethylene (HDPE), polyethylene terephthalate (PET) or polypropylene (PP) and is often joined to the bottle with a hot melt adhesive.

The demands put on the adhesive bond in this application are diverse and substantial. As an example, stresses on the bond often cause the base cup and bottle assemblies to be split or separated during transit of the empty bottles and then they cannot be used on the automated filling lines. When the bottle is filled, sufficient pressure is exerted by the contents to give a better mechanical fit between the base cup and bottle, thereby keeping the base cup joined to the bottle. However, once the bottle is partially emptied during use by the consumer, the mechanical fit no longer contributes to the joined area and the role of the adhesive is again critical since separation of bottle and base cup, particularly if the consumer is holding only the base cup, can present a major problem. It will be further recognized that the bottle assembly will be exposed to a variety of temperature and humidity conditions prior to and after filling, which conditions will also contribute to the stresses placed on the adhesive used therein.

U.S. Pat. No. 4,212,910 issued July 15, 1980 to Taylor et. al. describes the construction of PET bottle assemblies of specific hot melt adhesives comprising a blend of an A-B-A block copolymer, a tackifying resin which servies to extend the adhesive properties of the system; at least one stabilizer; and at least one wax or oil diluent. While the resultant assemblies are characterized by bonds or joints which possess an unusual combination of excellent low and high temperature adhesion and flexibility as well as high bond strengths, further improvements in heat resistance are desired especailly for applications such as pasteurization wherein the PET bottle assemblies are filled with heated liquids.

We have now found that a specific class of hot melt adhesives based on a substantially radial styrene-butadiene block copolymer, the copolymer having a styrene content greater than about 35% by weight, a modulus at 300% elongation of at least 4.5 MPa and a solution viscosity less than about 1000 cps., when used to bond PET bottles to the HDPE base cups, will produce PET bottle assemblies with sufficient strength, heat resistance and integrity to conform to the rigid specifications set by the bottling industry.

Thus, the present invention is directed to PET bottle assemblies ccmprising a PET bottle which has been blow-molded and joined to a high density polyethylene (HPDE), polyester terephthalate (PET) or polypropylene (PP) base cup with a hot melt adhesive which consists essentially of a blend of: (1) a substantially radial styrene-butadiene block copolymer, the copolymer having a styrene content greater than about 35% by weight, a tensile modulus at 300% elongation of at least 4.5 MPa and a solution viscosity less than about 1000 cps (measured as a 25% solution in toluene at 23°C using a Brookfield viscometer); (2) an ethylene vinyl acetate copolymer containing about 17 to 42% vinyl acetate; (3) an optional styrene-isoprene-styrene block copolymer (4) at least one tackifying resin which serves to extend the adhesive properties of the system; (5) at least one stabilizer; and (6) at least one wax or oil diluent.

The block copolymers useful herein are comprised of styrene and butadiene blocks (SBS) arranged in a substantially radial configuration and contain at least 35%, and generally up to about 50%, by weight of the styrene moiety. Of greater significance however, the copolymers selected should exhibit a tensile modulus at 300% elongation of at least about 4.5 MPa and a solution viscosity less than about 1000 cps (25% in toluene at 23°C using a Brookfield visccmeter). These copolymers may be prepared using methods taught, for example, in U.S. Pat. Nos. 3,239,478; 3,427,269; 3,700,633; 3,753,936 and 3,932,327. Alternatively they are available from Shell Chemical Co. under the trademark Kraton DX1122 (37% styrene, modulus of 4.8 MPa, viscosity 670 cps) and from Eni Chem Americas (Agip USA Inc.) as Europrene SOL T 162LW/1 (40% styrene, modulus of 5.0 MPa, viscosity 750 cps) or SOI T 162 LW/2 (40% styrene, modulus of 4.6 MPa, viscosity (640 cps). While the optimum amounts of the copolymer used in the adhesive will vary depending on the end use application, the copolymer will generally be present in the adhesive formulation at levels of about 10 to 40% by weight, preferably about 15 to 25% by weight.

In addition to the styrene-butadiene block copolymer, there is also optionally present up to 15%, preferably 5 to 10% by weight of a styrene-isoprene-styrene block copolymer (SIS) having a styrene content of 14 to 30% by weight, a tensile modulus at 300% elongation of 1 to 2 MPa. and a melt flow index (as calculated by 1238-57T-condition G) of 1-10 gm/10 min. Representative of such polymers are 501 T-I93A from Enichem (styrene content of 25%, tensile modulus at 300% elongation of 1.6 MPa, and melt index of 3 gm/10 min); Kraton 1111 from Shell Chemical (styrene content of 21%, tensile modulus at 300% elongation of 1.4 MPa, and a solution viscosity at 25% concentration in toluene at 77° F of 1,300 cps.). This styrene-isoprene-styrene block copolymer is used to help maintain the thermal viscosity stability of the adhesive composition during heating and application.

The ethylene-vinyl acetate copolymers useful here in are those copolymers containing from about 17 to about 42% vinyl acetate, preferably 17 to 29%, based on the weight of the copolymer. Commercially available ethylene-vinyl acetate copolymers that are especially suited for use herein are sold by DuPont under the trademark "Elvax". For example, Elvax 250 contains 27.2 to 28.8% vinyl acetate and has a melt index of 38-48 dg/min., while Elvax 420 contains 17.5 to 18.5% vinyl acetate and has a melt index of 136-165 dg./min. The melt index is a value determined by ASTM D 1238 procedure and reflects the molten flow character of the copolymer. The higher the number, the greater the flow, and vice versa. Greater flow also reflects lower molecular weight and low molten viscosity, and vice versa. A blend of copolymers could be used by selectively choosing high and low melt index copolymers to arrive at a desired median melt index, viscosity, etc. The ethylene vinyl acetate copolymer is used at a level of 5 to 25%, preferably 7.5 to 10, by weight of the adhesive formulation.

The tackifying resins useful in the adhesive compositions can be hydrocarbon resins, hydrogenated hydrocarbon resins, synthetic polyterpenes, rosin esters, natural polyterpenes, and the like. More particularly, the useful tackifying resins include any compatible resins or mixtures thereof such as (1) natural and modified rosins such, for example, as gum rosin, wood rosin, tall oil rosin, distilled rosin, hydrogenated rosin, dimerized rosin, and polymerized rosin; (2) glycerol and pentaerythritol esters of natural and modified rosins, such, for example as the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; (3) copolymers and terpolymers of natural terpenes, e.g. styrene/terpene and alpha methyl styrene/terpene; (4) polyterpene resins having a softening point, as determined by ASTM method E28-58T, of from about 80 to 150° C; the latter polyterpene resins generally resulting from the polymerization of terpene hydrocarbons, such as the bicyclic monoterpene known as pinene, in the presence of Friedel-Crafts catalysts at moderately low temperatures; also included are the hydrogenated polyterpene resins; (5) phenolic modified terpene resins and hydrogenated derivatives thereof such, for example, as the resin product resulting from the condensation, in an acidic medium, of a bicyclic terpene and a phenol; (6) aliphatic petroleum hydrocarbon resins having a Ball and Ring softening point of from about 70 to 135° C.; the latter resins resulting from the polymerization of monomers consisting of primarily of olefins and diolefins; also included are the hydrogenated aliphatic petroleum hydrocarbon resins; (7) aromatic petroleum hydrocarbon resins and the hydrogenated derivatives thereof; and (8) alicyclic petroleum hydrocarbon resins and the hydrogenated derivatives thereof. Mixtures of two or more of the above described tackifying resins may be required for some formulations. The tackifier is used in amounts of 20 to 65% by weight.

The remainder (up to about 60% by weight) of the hot melt adhesive comprises at least one wax or oil diluent. These wax or oil diluents are employed in order to reduce the melt viscosity or cohesive characteristics of the hot melt adhesive compositions without appreciable decreasing their adhesive binding characteristics. Among the applicable wax diluents are included: (1) low molecular weight, e.g. 1000-6000, polyethylene having a hardness value, as determined by ASTM method D-1321, of from about 0.1 to 120 and an ASTM softening point of from about 150°-250° F.; (2) petroleum waxes such as paraffin wax having a melting point of from about 130° to 175° F. and microcrystalline wax having a melting point of from about 135° to 200° F.; the latter melting points being determined by ASTM method D127-60; (3) atactic polypropylene having a Ball and Ring softening point of from about 120° to 160 °C; and (4) synthetic waxes made by polymerizing carbon monoxide and hydrogen such as Fischer-Tropsch wax. Each of these wax diluents is solid at room temperatures. Hydrogenated animal, fish and vegetable fats and oils such as hydrogenated tallow, lard, soya oil, cottonseed oil, castor oil, menhadin oil, cod liver oil, etc., are solid materials at ambient temperature by virture of their being hydrogenated and are also found to be useful to function as the wax diluent equivalent. These hydrogenated materials are often referred to in the adhesive industry as "animal or vegetable waxes". Additionally hydrocarbon oils, especially naphthenic or paraffinic process oils, may also be employed herein as the diluent. Suitable plasticizing or extending oils include not only the usual plasticizing oils but also olefin oligomers and low molecular weight polymers as well as vegetable and animal oil and their derivatives. The petroleum derived oils which may be employed are relatively high boiling materials containing only a minor proportion of aromatic hydrocarbons (preferably less than 30% and, more particularly, less than 15% by weight of the oil). Alternatively, the oil may be totally non-aromatic. The oligomers may be polypropylenes, polybutenes, hydrogenated polyisoprene, hydrogenated polybutadiene, or the like having average molecular weights between about 350 and about 10,000.

Among the applicable stabilizers or antioxidants included herein are high molecular weight hindered phenols and multifunctional phenols such as sulfur and phosphorous-containing phenols. Hindered phenols are well known to those skilled in the art and may be characterized as phenolic compounds which also contain sterically bulky moieties in close proximity to the phenolic hydroxyl group thereof. In particular, tertiary butyl groups generally are substituted onto the benzene ring in at least one of the ortho positions relative to the phenolic hydroxy group. The presence of these moieties in the vicinity of the hydroxyl group serves to retard its stretching frequency and, correspondingly, its reactivity; this steric hindrance thus providing the phenolic compound with its stabilizing properties. Representative hindered phenols include: 1,3,5-trimethyl 2,4,6-tris (3,5-di-tert-butyl-4-hydroxybenzyl)benzene; pentaerythrityl tetrakis-3(3,5-di-tert-butyl-4-hydroxyphenyl)propionate; n-octadecyl-3,5-di-tert-butyl-4-hydroxyphenol)-propionate; 4,4´-methylenebis (2,6-tert-butylphenol); 4,4´-thiobis (6-tert-butyl-o-cresol); 2,6-di-tertbutylphenol; 6-(4-hydroxyphenoxy)-2,4-bis(n-octyl-thio)-1,3,5-triazine; di-n-octadecyl 3,5-di-tert-butyl-4-hydroxy-benzylphosphonate; 2-(n-octylthio) ethyl 3,5-di-tert-butyl--4-hydroxy-benzoate; and sorbitol hexa[3-(3,5-di-tert-butyl-4-hydroxyphenyl)-propionate]. The stabilizer is present in amounts of 0.1 to 4% by weight, preferably less than about 2%.

Optional additives may be incorporated into the hot melt compositions in order to modify certain properties thereof. Among these additives may be included colorants such as titanium dioxide; and fillers such as talc and clay, etc.

These hot melt adhesive compositions may be formulated using techniques known in the art. An exemplary procedure involves placing approximately half of the total tackifying resin concentration in a jacketed mixing kettle, preferably in a jacketed heavy duty mixer of the Baker-Perkins Day or type, which is equipped with rotors and thereupon raising the temperature to a range of from about 250° to 350° F., the precise temperature utilized depending on the melting point of the particular tackifying resins. When the resin has melted, stirring is initiated and the block polymer(s) and stabilizer are added together with ary optional additives whose presence may be desired, the addition of the latter components being extended over a prolonged period in order to avoid the formation of lumps. Mixing and heating are continued until a smooth, homogeneous mass is obtained whereupon the remainder of the tackifying resin and the wax or oil are thoroughly and uniformly admixed therewith. The resultant hot melt adhesives are generally produced in slat form and packaged in lined corrugated boxes.

The viscosity of the hot melt adhesives at application temperature (300°-400° F.) is generally in the range of about 1000 to 8000 cps., with ranges of 3000 to 4000 cps. preferred. In order to produce the PET bottle assemblies of the present invention, the bottles and base cups are typically fed onto straight-line or centrifugal feeder units, the hot melt adhesive applied in dots through a multiple orifice nozzle at a coating weight of approximately 0.4 to 0.75 gms. per base cup, and then the bottle and base cup are clamped together for a minimum of about 6.5 seconds to assure straight assembly and proper set-up of the hot melt adhesive. The assemblies are then generally labeled and packaged into palletized loads for shipment to the bottling operation.

In the following illustrative examples all parts are given by weight and all temperatures in degrees Celsius unless otherwise noted.

## EXAMPLES I-III

The following example illustrates the preparation of hot melt adhesives suitable for use in the PET bottle assemblies of the present invention.

In preparing the following samples, a heavy duty mixer which had been heated to 150° C and which was equipped with a stirring paddle was charged with half of the tackifying resin. After melting of the resins, stirring was then initiated whereupon the block copolymers, ethylene vinyl acetate and the antioxidants were added slowly. Heating and stirring were continued until a homogeneous mass was obtained whereupon the remainder of the tackifying resin and the wax were admixed therewith. The molten mixture was then extruded into slats and cooled to room temperature.

The adhesive composition of Example I comprised 22% of Kraton DX1122 (an SBS radial block copolymer); 8% of Sol T-193A (an 515 block copolymer from Enichem); 7.5% ethylene vinyl acetate (containing 72% ethylene); 34.5% of a glycerol ester tackifier (from Arizona Chemical) having a softening point of 85°C; 28% paraffin wax; 1.45% of a mixture of stabilizers and antioxidants. A solar formulation was used in Example II but the glycerol ester employed was from Hercules.

A similar adhesive (Example III) was prepared as above using 30% Kraton DX 1122, 7.5% of the ethylene vinyl acetate, 34.5% of the Arizona Chemical glycerol ester tackifier, 28% paraffin wax and 1.45% stabilizer/antioxidant.

The hot melt adhesive compositions produced as in Examples I-III were compared with a commercially employed adhesive falling within the scope of U.S. Pat. No. 4,212,910 ("Control") using the following testing procedures simulating the properties needed for successful commercial applications.

## Test Procedure:

Viscosity measurements were determined using a Brookfield viscometer (Spindle 27) at 350°F. The adhesives were subjected to the following tests to determine the heat resistance of the adhesive under a constant load and static stress and elevated temperature.

The tensile strength of the hot melt adhesive was determined on samples cast from the hot melts and molded in silicone rubber molds into the shape of dog bones. After cooling, the dog bone shaped specimens were removed from the mold and tested using an Instron Tensile Tester at a speed of 12 inches per minute. The force required to start to stretch the specimen is recorded as the "tensile yield", the maximum force attained is the "ultimate tensile". The heat stability of the adhesive blends was determined in the following manner: a 100 gram sample was stored covered at 175°C. for 72 hours and observed for formation of gel, skin, and edge ring or any other deleterious change in color, any of latter indicating unsuitability for use in commercial hot melt adhesive applications.

Cold crack or cold flexibility was determined by flexing a 2 inch by 1/2 inch by 20 mil film with a "V" shaped wedge while positioned on top of a "V" shaped block. The width of the opening in the top of the block was 1-1/2 inch and the specimen was placed on top of the block lengthwise and was held in place by small weights. This construction was placed in a $CO_2$ chamber and the temperature allowed to equilibrate for 5 minutes at a predetermined temperature. At the end of this time the film was flexed. If the film cracked, the temperature was noted and the temperature was raised and the test repeated; if the film did not crack, the temperature was lowered and the test was repeated to determine the lowest temperature at which cracking occured.

The adhesion test was carried out by laminating untreated high density polyethylene (HDPE) to polyethylene terephthalate (PET) film and pulling the construction on an Instron machine. The adhesive film thickness is 8-10 mils. The specimen was pulled in a 180° peel mode at a crosshead speed of 20 inches/min. The average number of pounds/linear inch was recorded.

The lap shear test was carried out by hanging bonds of PET/HDPE (made by the lamination technique used above) in an oven at 125° and 130°F with a 500 gram load in a shear mode. The length of time until the bonds failed was noted.

Ring and Ball softening point was determined using ASTM method E-28.

The results of the testing are shown below:

| Test | Control | Example I | Example II | Example III |
|---|---|---|---|---|
| Visc. @ 350° F | 3,725 cps | 3,700 cps | 3,700 cps | 3,800 cps |
| Softening Point (R and B) | 194° F | 207° F | 210° F | 210° F |
| Tensile (ultimate) | 400 psi | 540 | 540 | 570 psi |
| Peel Adhesion (Instron) | 9.4 lb./lin. in. | 15.6 lb./lin. in. | 14.1 lb./lin. in. | 13.2 lb./lin. in. |
| Lap Shear (500 gram load, hrs to fail) | | | | |
| at 125° F | 7.5 hrs. | 25.75 hrs. | * | * |
| at 130° F | 1.25 hrs. | 4.5 hrs. | 5.25 hrs. | 5 hrs. |
| Cold Crack | | | | |
| Pass | -45° F | -45° F | -45° F | -45° F |
| Fail | (test discontinued due to limitations of cooling chamber) | | | |
| Heat Stability | | | | |
| Edge Ring | slight | slight | slight/moderate | moderate |
| Char | slight | slight | slight | moderate |
| skin | none | none | none | none |
| gel | none | none | none | none |
| Final Viscosity. cps. @ 350° F | 2,435 cps. | 2,738 cps. | 2,638 cps | 3,663 cps |
| % Visc. Change | -34.6% | -26% | -28% | -3.6% |

(*not tested)

The results of the testing show the markedly higher softening point and heat resistance of the compositions of the invention. It is further noted that the adhesives of Examples I-III also exhibited better adhesion as demonstrated by significantly higher peel adhesion value of Example I-III and significant higher heat resistance as evidenced by longer time to failure values for lap shear bonds under load at 130° F. The adhesives of Example I-III are also substantially equivalent in viscosity and cold resistance performance to the adhesives of the prior art.

Similar results may be achieved varying the raw materials, for example, by using other tackifiers, block copolymers and diluent as described herein.

## Claims

1. A polyethylene terephthalate bottle assembly comprising a polyethylene terephthalate bottle which has been blow-molded and joined to a base cup with a hot melt adhesive which consists essentially of a blend of:

a) 10 to 40% by weight of a substantially radial styrene-butadiene block copolymer having a styrene content greater than 35% by weight, a modulus at 300% elongation of at least 4.5 MPa and a solution viscosity less than 1000 cps (measured as a 25% solution in toluene at 23° C using a Brookfield viscometer);

b) 0-15% of a styrene isoprene styrene block copolymer having a styrene content of 14 to 30%, a tensile modulus at 300% elongation of 1 to 2 MPa and a melt flow index of 1-10 gm/10 min;

c) 5 to 25% of an ethylene vinyl acetate copolymer containing about 17 to 42% vinyl acetate;

d) 20 to 65% by weight of at least one compatible tackifying resin;

e) 0.1 to 4% by weight stabilizer; the remainder (to 100%) comprising at least one wax or oil diluent.

2. The polyethylene terephthalate bottle of Claim 1 wherein the styrene butadiene copolymer in the adhesive contains 37 to 40% styrene, has a modulus at 300% elongation of at least 4.6 MPa and a solution viscosity of 640 to 750 cps.

3. The polyethylene terephthalate bottle of Claim 1 wherein the tackifying resin in the adhesive is selected from the group consisting of natural and modified rosins; glycerol and pentaerythritol esters of natural and modified rosins; copolymers and terpolymers of natural terpenes; polyterpene resins having a softening point, as determined by ASTM method E28-58T, of from about 80 to 150°C; phenolic modified terpene resins and hydrogenated derivatives thereof; aliphatic petroleum hydrocarbon resins having a Ball and Ring softening point of from about 70 to 135°C.; aromatic petroleum hydrocarbon resins and the hydrogenated derivatives thereof; and alicyclic petroleum hydrocarbon resins and the hydrogenated derivatives thereof.

4. The polyethylene terephthalate bottle of Claim 1 wherein the styrene butadiene copolymer in the adhesive is present in an amount of 15 to 25% by weight.

5. The polyethylene terephthalate bottle of Claim 1 wherein the base cup is comprised of high density polyethylene, polyethylene terephthalate or polypropylene.

6. The polyethylene terephthalate bottle of Claim 3 wherein the tackifier is a glycerol ester of natural or modified rosin.

7. A polyethylene terephthalate bottle assembly comprising a polyethylene terephthalate bottle which has been blow-molded and joined to a base cup with a hot melt adhesive which consists essentially of a blend of:

a) 10 to 40% by weight of a substantially radial styrene-butadiene block copolymer having a styrene content greater than 35% by weight, a modulus at 300% elongation of at least 4.5 MPa and a solution viscosity less than 1000 cps (measured as a 25% solution in toluene at 23°C using a Brookfield viscometer);

b) 5-15% of a styrene isoprene styrene block copolymer having a styrene content of 14 to 30%, a tensile modulus at 300% elongation of 1 to 2 MPa and a melt flow index of 1-10 gm/10 min;

c) 5 to 25% of an ethylene vinyl acetate copolymer containing about 17 to 42% vinyl acetate;

d) 20 to 65% by weight of at least one compatible tackifying resin;

e) 0.1 to 4% by weight stabilizer; the remainder (to 100%) comprising at least one wax or oil diluent.

8. The polyethylene terephthalate bottle of Claim 7 wherein there is present in the adhesive 5 to 10% by weight of the styrene isoprene styrene block copolymer.

9. A hot melt adhesive composition comprising:

a) 10 to 40% by weight of a substantially radial styrene-butadiene block copolymer having a styrene content greater than 35% by weight, a modulus at 300% elongation of at least 4.5 MPa and a solution viscosity less than 1000 cps (measured as a 25% solution in toluene at 23°C using a Brookfield viscometer);

b) 0-15% of a styrene isoprene styrene block copolymer having a styrene content of 14 to 30%, a tensile modulus at 300% elongation of 1 to 2 MPa and a melt flow index of 1-10 gm/10 min;

c) 5 to 25% of an ethylene vinyl acetate copolymer containing about 17 to 42% vinyl acetate;

d) 20 to 65% by weight of at least one compatible tackifying resin;

e) 0.1 to 4% by weight stabilizer; the remainder (to 100%) comprising at least one wax or oil diluent.

10. The hot melt adhesive composition of Claim 9 wherein there is present in the adhesive 5 to 10% by weight of the styrene isoprene styrene block copolymer.